# Europäisches Patentamt

## European Patent Office

### Office européen des brevets

(11) Veröffentlichungsnummer: **0 183 955**
**B1**

(12) **EUROPÄISCHE PATENTSCHRIFT**

(45) Veröffentlichungstag der Patentschrift: **08.08.90**

(51) Int. Cl.⁵: **F 27 B 9/24**

(21) Anmeldenummer: **85113356.1**

(22) Anmeldetag: **22.10.85**

(54) Hubbalkenofen.

(30) Priorität: **02.11.84 DE 3440126**

(43) Veröffentlichungstag der Anmeldung:
**11.06.86 Patentblatt 86/24**

(45) Bekanntmachung des Hinweises auf die
Patenterteilung:
**08.08.90 Patentblatt 90/32**

(84) Benannte Vertragsstaaten:
**AT BE CH FR GB IT LI LU NL SE**

(56) Entgegenhaltungen:
**BE-A- 689 131**
**DE-A-2 123 729**
**DE-A-2 569 262**
**FR-A-2 517 814**
**LU-A-29 112**

(73) Patentinhaber: **ITALIMPIANTI Società Italiana
Impianti p.a.
Piazza Piccapietra, 9
I-16121 Genova (IT)**
(84) **BE CH FR GB IT LI LU NL SE**

(73) Patentinhaber: **ITALIMPIANTI DEUTSCHLAND
GmbH
Graf-Adolf-Strasse 18
D-4000 Düsseldorf 1 (DE)**
(84) **AT**

(72) Erfinder: **Funghini, Augusto
Bebel Allee 63
D-5650 Solingen (DE)**
Erfinder: **Schwab, Dieter
Speldorfer Strasse 19
D-4000 Düsseldorf (DE)**
Erfinder: **Springer, Helmut
Prinz-Georg-Strasse 34
D-4000 Düsseldorf (DE)**

(74) Vertreter: **König, Reimar, Dr.-Ing. et al
Patentanwälte Dr.-Ing. Reimar König Dipl.-Ing.
Klaus Bergen Wilhelm-Tell-Strasse 14 Postfach
260162
D-4000 Düsseldorf 1 (DE)**

**Beschreibung**

Die Erfindung betrifft einen Hubbalkenofen mit einem Herd aus jeweils mit ihrer Längsachse parallel zur Vorschubrichtung angeordneten, in Vorschubrichtung zum Ofenende hin in kürzer werdende Abschnitte unterteilten und gegenüber den benachbarten Abschnitten versetzten Festbalken und Hubbalken.

Zum Befördern von Glühgut, insbesondere Brammen, während des Glühens sind Hubbalkenöfen und Schrittmacheröfen seit langes bekannt. Sie werden in Walzwerken bevorzugt verwendet, weil sie ein gleichmäßigeres Druchwärmen und beschädigungsfreieres Transportieren des Glühgutes als z.B. Stoßöfen gewährleisten.

Beim Transport durch den Ofen wird das Glühgut nach jedem Hub von dem Hubbalken für einige Minuten auf den Festbalken abgesetzt. Diese Transportpausen ermöglichen einerseits ein ausreichendes Verweilen des Glühguts im Ofen und andererseits die Rückkehr der Hubbalken in ihre abgesenkte Ausgangsstellung. Da auch bei hoher Ofentemperatur die Form und die Tragfähigkeit der Hub- und der Festbalken erhalten bleiben muß, bestehen sie meist aus kühlmitteldurchströmten Rohren. Beim Verweilen des Glühguts auf den gekühlten Festbalken entstehen jedoch an den Berührungsstellen des Glühguts Temperaturunterschiede bis etwa 150°C, sogenannte Kühlschatten.

Temperaturunterschiede des Glühguts beeinträchtigen die Oberflächengüte, die Maßhaltigkeit und die technologischen Eigenschaften des Glühgutes, so daß der Walzwerker eine Reduzierung der unvermeidlichen Temperaturunterschiede im Glühgut auf unter 30°C anstrebt.

Aus der deutschen Offenlegungsschrift 22 53 105 ist ein Durchlaufofen mit parallel zu Hubbalken angeordneten, gruppenweise absenkbaren, gekühlten Traghalten bekannt, die beim Absetzen und bei Stillstand des Glühguts anwechselnd die Tragerbeit erledigen, indem jeweils eine Gruppe der Trapbalken abgesenkt ist, so daß bei jedem Wechsel verschiedene Stellen des Glühguts von den Tragbalken berührt werden.

Dieser Ofen besitzt den Nachteil zusätzlich au dem Hubbalkenantrieb für alle Tragbalken eine aufwendige Tragkonstruktion mit Hebelgestänge zu benötigen.

Aus der deutschen Offenlegungsschrift 21 23 729 ist ein Durchlaufofen bekannt, bei dem innerhalb eines zwischen einer Anhebestelle und einer Absetzstelle des Erhitzungsgutes liegenden Vorschubbereiches einer Vorschubvorrichtung jeweils zwei zwei Hubbalken zwischen sich einschließende Auflagebalken V-förmig konvergierend und im benachbarten Vorschubbereich V-förmig divergierend zueinander angeordnet sind. Vorzugsweise sind jeweils ein Hubbalken und ein benachbarter Auflagebalken in einem Vorschubbereich V-förmig konvergierend und im benachbarten Vorschubbereich V-förmig divergierend zueinander angeordnet. Die Hubbalken und Auflagebalken verlaufen dabei über die gesamte Ofenlänge schräg, so daß durch die sich hierbei kontinuierlich ändernden Glühgutauflagestellen die Kühlschatten zwar teilweise angeschwächt, insgesamt jedoch verbreitert werden. Des weiteren lassen sich aufgrund des schrägen Verlaufs der Hubbalken und der Auflagebalken nur je zwei Hubbalken und zwei Auflagebalken innerhalb der Ofenbreite anordnen, so daß sich aufgrund der sich mit der Ofenbreite verändernden Glühgutauflagestellen bestimmte Brammenabmessungen nicht transportieren und somit nur bestimmte Chargierpläne einhalten lassen.

Der Erfindung liegt die Aufgabe zugrunde, einen Hubbalkenofen mit sich in Vorschubrichtung ändernden Auflagestellen des Glühguts auf den Hub- und den Festbalken mit denselben Abmessungen wie ein Hubbalkenofen mit in Vorschubrichtung jeweils durchgehenden Festbalken und Hubbalken zu schaffen, ohne Einschränkungen der zu chargierenden Glühgutabmessungen in Kauf nahmen zu müssen.

Diese Aufgabe wird dadurch gelöst, daß bei einem Hubbalkenofen der eingangs erwähnten Art erfindungsgemäß die im wesentlichen eine gemeinsame Längsachse aufweisenden Balkenabschnitte abwechselnd aus Festbalkenabschnitten und Hubbalkenabschnitten bestehen und daß die auf den ersten Festbalkenabschnitt folgenden Festbalkenabschnitte an ihren dem Ofenanfang zugekehrten Enden seitlich abgewinkelt sowie an den benachbarten Hubbalkenabschnitten vorbeigeführt sind.

Auf diese Weise kommen in den Transportpausen abschnittweise verschiedene, genügend weit auseinanderliegende Bereiche des Glühguts mit den Festbalken in Berührung. Des weiteren behält der erfindungsgemäße Hubbalkenofen dieselben Abmessungen wie ein Hubbalkenofen mit in Vorschubrichtung jeweils durchgehenden Festbalken und Hubbalken. Da die sich vertikal und horizontal bewegenden Hubbalkenabschnitte in horizontaler Richtung einen genügenden Freiraum besitzen und nicht die in Vorschubrichtung benachbarten Festbalkenabschnitte bei ihrer Vorwärtsbewegung berühren dürfen, müssen die Festbalkenabschnitte eine entsprechend der Amplitude der Translationsbewegung der Hubbalkenabschnitte genügend großen Abstand halten. Andererseits dürfen aber die Abstände der Balkenabschnitte in Vorschubrichtung einen Höchst abstand nicht überschrieten, um das Glühgut sicher abzustützen. Deshalb sind die rückwärtigen Enden der Festbalkenabschnitte seitlich an den benachbarten Hubbalkenabschnitten vorbeigeführt, so daß einerseits die Hubbalkenabschnitte genügend Spielraum besitzen und andererseits die Längslücke zwischen den Abschnitten genügend klein bleibt oder ganz verschwindet, wenn die benachbarten Balkenenden einander überlappen.

Dies geschieht vorzugsweise mit einen stumpfwinkligen Doppelknick, der in Vorschubrichtung hinten an dem dem Hubbalkenabschnitt gegenüberliegenden Ende des Festbalkenabschnitts angeordnet ist.

Die Erfindung wird nachfolgend anhand eines in der Zeichnung dargestellten Ausführungsbeispiels des näheren erläutert. In der Zeichnung zeigen:

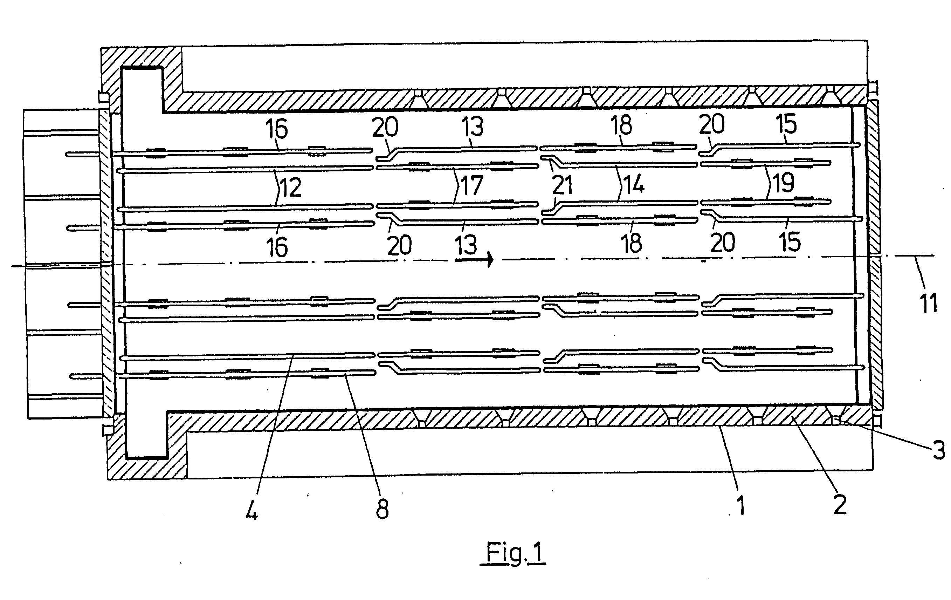

Fig. 1 eine Draufsicht eines erfindungsgemäßen Hubbalkenofens,

Fig. 2 eine perspektivische Darstellung zweier Ausschnitte des Hubbalkenofens nach Figur 1,

Fig. 3 einen Schnitt gemäß linie III-III in Figure 2 und

Fig. 4 einen Schnitt gemäß IV-IV in Figur 2.

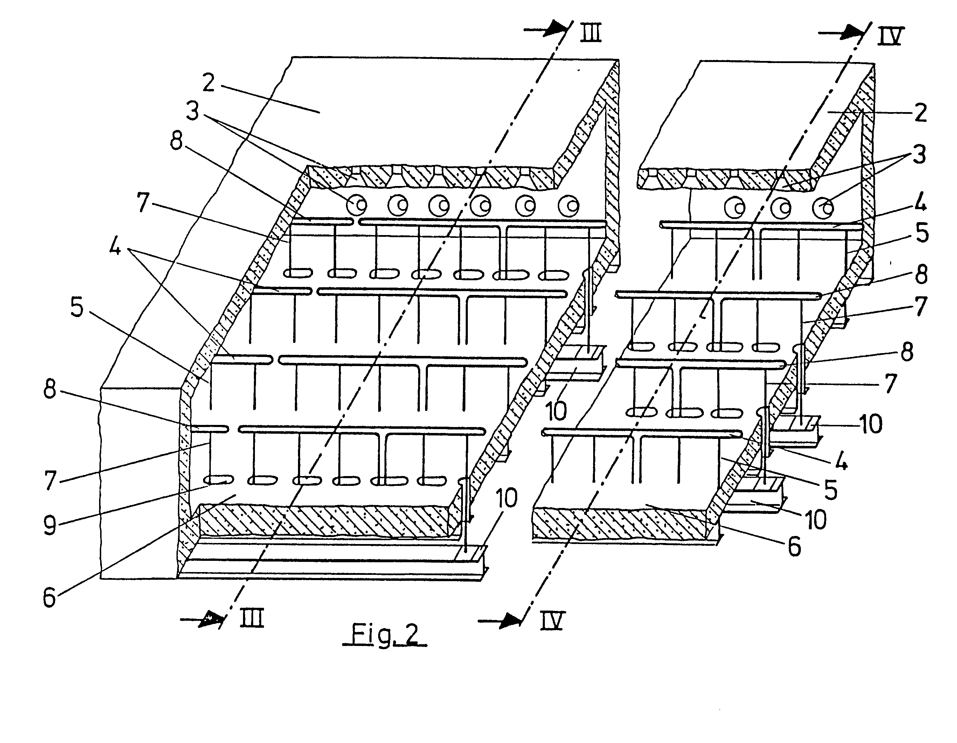

Der Hubbalkenofen 1 besteht im wesentlichen aus einem feuerfesten Gehäuse 2 mit Decken- und Seitenbrennern 3. Festbalken 4 stützen sich mit Stehern 5 auf dem Ofenboden 6 ab, während Stützen 7 von Hubbalken 8 durch Öffnungen 9 im Ofenboden 6 reichen und auf einem gemeinsamen Verfahrrahmen 10 angeordnet sind (Fig. 2). Der mit Zylindern angetriebene Verfahrramen 10 fährt mit Rollen auf ebenen Schienen, die auf einem zweiten mit Hubzylindern angetriebenen mit Rollen auf geneigten Schienen gleitenden Hubrahmen befestigt sind, wodurch eine schrage Hub- und eine Horizontalbewegung der Hubbalken 8 erzeugt wird. Symmetrisch zu einer Linie 11 sind je vier Fest- und Hubbalken 4, 8 angeordnet.

Die Fest- und die Hubbalken 4, 8 sind in vier unterschiedlich lange Festbalkenabschnitte 12 bis 15 und Hubbalkenabschnitten 16 bis 19 unterteilt. Die Abschnitte werden zum Ofenende hin kürzer, damit in Transportrichtung ein häufigeres Wechseln der Berührungsstellen erfolgt.

Die auf den ersten Festbalkenabschnitt 12 folgenden Festbalkenabschnitte 13 bis 15 sind einseitig gekröpft, d.h. mit einem Doppelknick 20, 21 versehen, damit ihr dem Ofenanfang zugekehrtes Ende seitlich an dem benachbarten Hubbalkenabschnitten 16 bis 18 vorbeiführt und so die Bewegungsfreiheit der Hubbalkenabschnitte 16 bis 18 und die volle Tragfähigkeit der Festbalkenabschnitte 13 bis 15 gewährleistet ist.

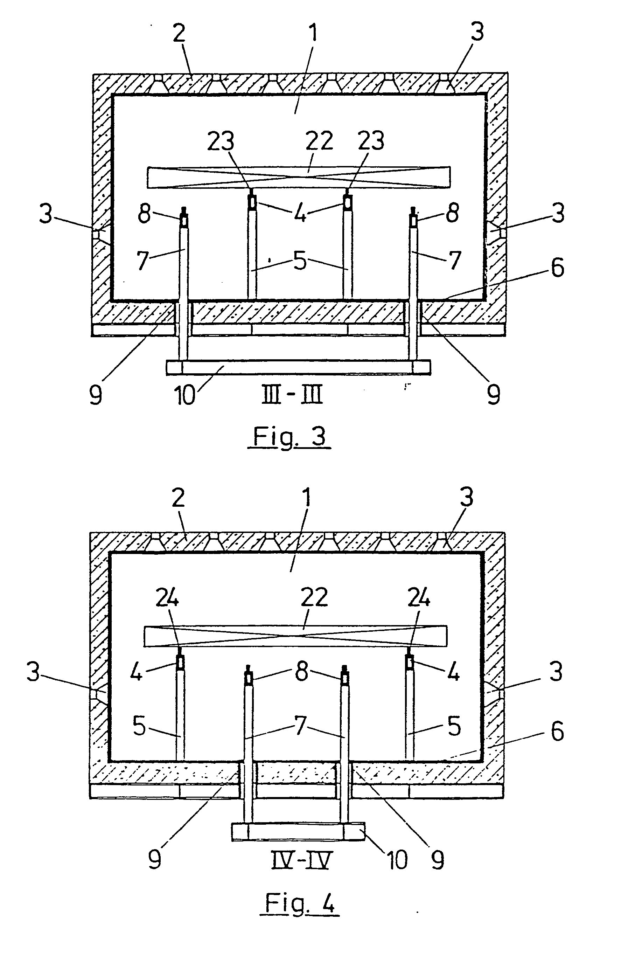

Im ersten und dritten Balkenabschnitt befinden sich die Fest- und die Hubbalken 4, 8 in der in Fig. 3 dargestellten Konstellation. In der Ruhestellung des Glühguts 22, d.h. bei dessen Aufliegen auf den Festbalken 4, ergeben sich Kontaktstellen 23, an denen infolge der erheblichen Kühlwirkung der Festbalken Kühlschatten entstehen.

Im zweiten und im letzten Balkenabschnitt nehmen die Festund die Hubbalken 4, 8 die in Fig. 4 dargestellte Konstellation ein, und es ergeben sich andere Kontaktstellen 24, so daß sich die an den Kontaktstellen 23 nicht genügend erwärmten bzw. gekühlten Bereiche des Glühguts 22 aufwärmen können und unerwünschte Temperaturunterschiede ausgeglichen werden. Die sich an den Kontaktstellen 24 bildenden Kühlschatten werden in der in Fig. 3 dargestellten Position der Balken 4, 8 weitgehend eliminiert.

Die Abstände der Fest- und der Hubbalken 4, 8 voneinander sind so gewählt, daß die Auflagekräfte auf jedem Balkenabschnitt gleich groß sind. Auch sollen die Brammenden weder in ihrer Ruhestellung noch bei ihrer Vorwärtsbewegung mit ihren Stirnseiten auf einen Balken 4, 5 treffen, um eine Beschädigung der Balkenisolierung zu vermeiden.

## Patentansprüche

1. Hubbalkenofen mit einem Herd aus jeweils mit ihrer Längsachse parallel zur Vorschubrichtung angeordneten, in Vorschubrichtung zum Ofenende hin kürzer werdende Abschnitte unterteilten und gegenüber den benachbarten Abschnitten versetzten Festbalken und Hubbalken, dadurch gekennzeichnet, daß die im wesentlichen eine gemeinsame Längsache aufweisenden Balkenabschnitte (16, 13, 18, 15; 12, 17, 14, 19) abwechselnd aus Festbalkenabschnitten (12 bis 15) und Hubbalkenabschnitten (16 bis 19) bestehen und daß die auf den ersten Festbalkenabschnitt (12) folgenden Festbalkenabschnitte (13 bis 15) an ihren dem Ofenanfang zugekehrten Enden seitlich abgewinkelt sowie an den benachbarten Hubbalkenabschnitten vorbeigeführt sind.

2. Hubbalkenofen nach Anspruch 1, dadurch gekennzeichnet, daß die seitlichen Abwinkelungen der Festbalkenabschnitte (12 bis 15) aus einem stumpfwinkligen Doppelknick (20, 21) bestehen.

## Revendications

1. Four à longerons mobiles dont le laboratoire comporte des longerons fixes et des longerons mobiles qui sont orientés de manière que leurs axes longitudinaux soient parallèles à la direction d'avance de produits et sont subdivisés en segments qui diminuent de longueur dans le sens de l'avance vers l'extrémité du four et sont décalés par rapport aux segmente voisins, caractérisé en ce que les segments de longerons (16, 13, 18, 15; 12, 17, 14, 19) qui ont essentiellement um même axe longitudinal sont alternativement constitués par des segments de longerons fixes (12 à 15) et par des segments de longerons mobiles (18 à 19) et en ce que les segmente de longerons fixes (13 à 15) qui font suite au premier segment de longeron fixe (12) sont pliés latéralement au niveau de leurs extrémités situées du côté de l'entrée du four et passent devant les segments de longerons fixes voisins.

2. Four à longerons mobiles selon la revendication 1, caractérisé en ce que les parties des segments de longerons fixes (12 à 15) qui sont pliées latéralement comportent un double pliage (20, 21) à angle obtus.

## Claims

1. A walking beam furnace having a hearth comprising fixed and moving beams arranged with their longitudinal axes parallel to the feed direction, and divided into sections that becomes shorter towards the end of the furnace and are offset relative to the neighbouring sections, characterised in that the beam sections (16, 13, 18, 15; 12, 17, 14, 19) having substantially a common longitudinal axis consist alternately of fixed beam sections (12 to 15) and moving beam sections (16 to 19) and that the fixed beam sections (13 to 15) following the first fixed beam section (12) are angled laterally at their ends facing the start of the furnace to pass by the neighbouring moving beam sections.

2. A walking-beam furnace according to claim 1, characterised in that the lateral angling of the fixed beam sections (12 to 15) is in the form of an obtuse-angled double bend (20, 21).

EP 0 183 955 B1

Fig.1

Fig. 2

Fig. 3

Fig. 4